(19) Europäisches Patentamt
European Patent Office
Office européen des brevets

(11) Publication number: **0 400 866 A1**

(12) **EUROPEAN PATENT APPLICATION**

(21) Application number: **90305562.2**

(22) Date of filing: **22.05.90**

(51) Int. Cl.5: **C10M 143/02, C10M 149/06, C10M 151/04, C10M 159/12, C10L 1/22, C10L 1/24, C08F 8/00, //(C10M149/06, 143:02),(C10M151/04,143:02), (C10M159/12,129:28,129:93, 133:06,135:22,143:02), C10N30:02,C10N30:04, C10N60:00,C10N60:10**

(30) Priority: **30.05.89 US 358913**

(43) Date of publication of application: **05.12.90 Bulletin 90/49**

(84) Designated Contracting States: **BE DE FR GB IT NL**

(71) Applicant: **EXXON CHEMICAL PATENTS INC.**
**200 Park Avenue**
**Florham Park New Jersey 07932(US)**

(72) Inventor: **Gutierrez, Antonio**
**22 Tar Heels Road**
**Mercerville, New Jersey 08619(US)**
Inventor: **Lundberg, Robert Dean**
**4 Brian Drive**
**Bridgewater, New Jersey 08807(US)**

(74) Representative: **Northover, Robert Frank et al**
**Exxon Chemical Limited Exxon Chemical Technology Centre PO Box 1**
**Abingdon Oxfordshire, OX13 6BB(GB)**

(54) **Improved multifunctional viscosity index modifier additives derived from polyamines containing one primary amino group and at least one secondary amino group.**

(57) An oil soluble composition useful as a multifunctional viscosity improver additive for oleaginous composition comprising adduct of:

(A) high molecular weight ethylene copolymer substituted carboxylic acid material comprising reaction product of (i) ethylene copolymer having a number average molecular weight of at least 15,000, and (ii) monounsaturated carboxylic acid material; and

(B) at least one polyamine contining one primary amino group and at least one, preferably from 1 to 6, secondary amino group.

EP 0 400 866 A1

# IMPROVED MULTIFUNCTIONAL VISCOSITY INDEX MODIFIER ADDITIVES DERIVED FROM POLYAMINES CONTAINING ONE PRIMARY AMINO GROUP AND AT LEAST ONE SECONDARY AMINO GROUP

The invention relates to oil soluble polymeric compositions of matter useful as multifunctional viscosity index improver additives, particular viscosity index improver-dispersant additives, for oleaginous compositions such as fuel and lubricating oil compositions, and to oleaginous compositions containing said additives.

The concept of derivatizing V.I. improving high molecular weight ethylene copolymers, with acid moieties such as maleic anhydride, followed by reaction with an amine to form a V.I.-dispersant oil additive is known as indicated by the following patents.

U.S. Pat. No. 3,316,177 teaches ethylene-propylene-diene, which are heated to elevated temperatures in the presence of oxygen so as to oxidize the polymer and cause its reaction with maleic anhydride which is present during the oxidation. The resulting polymer can then be reacted with alkylene polyamines.

U.S. Pat. No. 4,089,794 teaches grafting the ethylene copolymer with maleic anhydride using peroxide in a lubricating oil solution, wherein the grafting is preferably carried out under nitrogen, followed by reaction with polyamine.

U.S. Pat. No. 4,137,185 teaches reacting $C_1$ to $C_{30}$ monocarboxylic acid anhydrides, and dicarboxylic anhydrides, such as acetic anhydride, succinic anhydride, etc. with an ethylene copolymer reacted with maleic anhydride and a polyalkylene polyamine to inhibit cross linking and viscosity increase due to further reaction of any primary amine groups which were initially unreacted.

U.S. Pat. No. 4,144,181 is similar to 4,137,185 in that it teaches using a sulfonic acid to inactivate the remaining primary amine groups when a maleic anhydride grafted ethylene-propylene copolymer is reacted with a polyamine.

U.S. Pat. No. 4,169,063 reacts an ethylene copolymer in the absence of oxygen and chlorine at temperatures of 150° to 250° C with maleic anhydride followed by reaction with polyamine.

A number of prior disclosures teach avoiding the use of polyamine having two primary amine groups to thereby reduce cross-linking problems which become more of a problem as the number of amine moieties added to the polymer molecule is increased in order to increase dispersancy.

German Published Application No. P3025274.5 teaches an ethylene copolymer reacted with maleic anhydride in oil using a long chain alkyl hetero or oxygen-containing amine.

U.S. Pat. No. 4,132,661 grafts ethylene copolymer, using peroxide and/or air blowing, with maleic anhydride and then reacts with a primary-tertiary diamine.

U.S. Pat. No. 4,160,739 teaches an ethylene copolymer which is grafted, using a free-radical technique, with alternating maleic anhydride and a second polymerizable monomer such as methacrylic acid, which materials are reacted with an amine having a single primary, or a single secondary, amine group.

U.S. Pat. No. 4,171,273 reacts an ethylene copolymer with maleic anhydride in the presence of a free-radical initiator and then with mixtures of $C_4$ to $C_{12}$ n-alcohol and amine such as N-aminopropylmorpholine or dimethylamino propyl amine to form a V.I.-dispersant pour depressant additive.

U.S. Pat. No. 4,219,432 teaches maleic anhydride grafted ethylene copolymer reacted with a mixture of an amine having only one primary group together with a second amine having two or more primary groups.

German published application No. 2753569.9 shows an ethylene copolymer reacted with maleic anhydride by a free-radical technique and then reacted with an amine having a single primary group.

German published application No. 2845288 grafts maleic anhydride on an ethylene-propylene copolymer by thermal grafting at high temperatures and then reacts with amine having one primary group.

French published application No. 2423530 teaches the thermal reaction of an ethylene copolymer with maleic anhydride at 150° C to 210° C followed by reaction with an amine having one primary or secondary group.

The early patents such as U.S. Pat. Nos. 3,316,177 and 3,326,804 taught the general concept of grafting an ethylene-propylene copolymer with maleic anhydride and then reacting with a polyalkylene polyamine such as polyethylene amines. Subsequently, U.S. Pat. No. 4,089,794 was directed to using an oil solution for free radical peroxide grafting the ethylene copolymer with maleic anhydride and then reacting with the polyamine. This concept had the advantage that by using oil, the entire reaction could be carried out in an oil solution to form an oil concentrate, which is the commercial form in which such additives are sold. This was an advantage over using a volatile solvent for the reactions, which has to be subsequently removed and replaced by oil to form a concentrate. Subsequently, in operating at higher polyamine levels in order to further increase the dispersing effect, increased problems occurred with the unreacted amine groups cross-linking and thereby causing viscosity increase of the oil concentrate during storage and

subsequent formation of haze and in some instances gelling. Even though one or more moles of the ethylene polyamine was used per mole of maleic anhydride during imide formation, cross-linking became more of a problem as the nitrogen content of the polymers was increased. One solution was to use the polyamines and then to react the remaining primary amino groups with an acid anhydride, preferably acetic anhydride, of U.S. Pat. No. 4,137,185 or the sulfonic acid or U.S. Pat. No. 4,144,181. The cross-linking problem could also be minimized by avoidance of the ethylene polyamines and instead using amines having one primary group which would react with the maleic anhydride while the other amino groups would be tertiary groups which were substantially unreactive. Patents or published applications showing the use of such primary-tertiary amines noted above are U.S. Pat. No. 4,219,432, wherein a part of the polyamine was replaced with a primary-tertiary amine; U.S. Pat. No. 4,132,661; U.S. Pat. No. 4,160,739; U.S. Pat. No. 4,171,273; German No. P2753569.9; German No. 2,845,288; and French No. 2,423,530.

U.S. Patent No. 4,517,104 discloses polymeric viscosity index (V.I.) improver-dispersant additive for petroleum oils, particularly lubricating oils, comprising a copolymer of ethylene with one or more $C_3$ to $C_{28}$ alpha-olefins, preferably propylene, which has been grafted with acid moieties such as maleic anhydride using a free radical initiator in a solvent such as lubricating oil, and then reacted with a carboxylic acid component including hydrocarbyl substituted succinic anhydride or acid having 12-400 carbon atoms in said hydrocarbyl group or long chain monocarboxylic acid, and a polyamine having two or more primary amine groups. Or the grafted polymer may be reacted with said acid component prereacted with said polyamine to form salts, amides, imides, etc. and then reacted with said grafted olefin polymer. These reactions can permit the incorporation of varnish inhibition and dispersancy into the ethylene copolymer while inhibiting cross-linking or gelling.

U.S. Patent No. 4,632,769 discloses oil soluble viscosity index improving ethylene copolymers, such as copolymers of ethylene and propylene, reacted or grafted with ethylenically unsaturated carboxylic acid moieties, preferably maleic anhydride moieties, and then reacted with polyamines having two or more primary amine groups and a $C_{22}$ to $C_{28}$ olefin carboxylic acid component. These reacticns can permit the incorporation of varnish inhibition and dispersancy into the ethylene copolymer while inhibiting cross-linking or gelling.

The materials of the present invention are an improvement over those of the aforediscussed prior disclosures because of their effectiveness and their ability to provide enhanced lubricating oil dispersancy.

## SUMMARY OF THE INVENTION

Compositions of matter useful as multifunctional viscosity index improvers for oleaginous compositions, including fuel and lubricating oil compositions, comprising high molecular weight ethylene copolymers, such as ethylene-α-olefin copolymers, reacted or grafted with ethylenically unsaturated carboxylic acid materials, such as maleic anhydride, and reacted with at least one polyamine containing only one primary amino group, one or more secondary amino groups, and preferably no tertiary amino groups.

## DETAILED DESCRIPTION OF THE INVENTION

The compositions of matter of the instant invention comprise high molecular weight, i.e., at least above 10,000, preferably at least 15,000 number average molecular weight, copolymers of ethylene, preferably copolymers of ethylene and at least one other $C_3$ to $C_{28}$ alpha-olefin such as propylene, reacted or grafted with ethylenically unsaturated carboxylic acid material to form a grafted ethylene copolymer, followed by reaction with at least one polyamine containing only one primary amine group and at least one secondary amine group. These materials are useful as multifunctional viscosity index improver additives, particularly viscosity index improver-dispersant additives for oleaginous compositions such as fuel and lubricating oil compositions.

## ETHYLENE COPOLYMER

Oil soluble ethylene copolymers used in the invention are those capable of modifying or improving the

viscosity index of oleaginous compositions, particularly lubricating oil compositions, i.e., polymers useful as V.I. improvers. Therefor, they generally will have a number-average molecular weight ( $\overline{M}_n$) of greater than about 10,000, preferably at least about 15,000. These copolymers preferably have number average molecular weights of from about 15,000 to about 500,000, more preferably about 20,000 to about 300,000, and most preferably from about 30,000 to about 150,000. These V.I. improvers will generally have a narrow range of molecular weight, as determined by the ratio of weight-average molecular weight ( $\overline{M}_w$) to number-average molecular weight ( $\overline{M}_n$). Polymers having a $\overline{M}_w/\overline{M}_n$ of less than 10, preferably less than 7, and more preferably 4 or less are most desirable. As used herein ( $\overline{M}_n$) and ( $\overline{M}_w/\overline{M}_n$) are measured by the well known techniques of vapor phase osmometry (VPO), membrane osmometry and gel permeation chromatography. In general, polymers having a narrow range of molecular weight may be obtained by a choice of choice of principal catalyst and cocatalyst combination, addition of hydrogen during the synthesis, etc. Post synthesis treatment such as extrusion at elevated temperature and under high shear through small orifices, mastication under elevated temperatures, thermal degradation, fractional precipitation from solution, etc. may also be used to obtain narrow ranges of desired molecular weights and to break down higher molecular weight polymer to different molecular weight grades for V.I. use.

These polymers are prepared from ethylene and ethylenically unsaturated hydrocarbons including cyclic, alicyclic and acyclic, containing from 3 to 28 carbons, e.g. 2 to 18 carbons. These ethylene copolymers may contain from 15 to 90 wt. % ethylene, preferably 30 to 80 wt. % of ethylene and 10 to 85 wt. %, preferably 20 to 70 wt. % of one or more $C_3$ to $C_{28}$, preferably $C_3$ to $C_{18}$ more preferably $C_3$ to $C_8$, unsaturated hydrocarbons, preferably alpha olefins. While not essential, such copolymers preferably have a degree of crystallinity of less than 25 wt. %, as determined by X-ray diffraction and differential scanning calorimetry. Copolymers of ethylene and propylene are most preferred. Other alpha-olefins suitable in place of propylene to form the copolymer, or to be used in combination with ethylene and propylene, to . form a terpolymer, tetrapolymer, etc., include 1-pentene, 1-hexene, 1-heptene, 1-octene, 1-nonene, 1-decene, etc.; also branched chain alpha-olefins, such as 4-methyl-1-pentene, 4-methyl-1-hexene, 5-methylpentene-1, 4,4-dimethyl-1- pentene, and 6-methylheptene-1, etc., and mixtures thereof.

The term copolymer as used herein, unless otherwise indicated, includes terpolymers, tetrapolymers, etc., of ethylene, said $C_{3-28}$ alpha-olefin and/or a non-conjugated diolefin or mixtures of such diolefins which may also be used. The amount of the non-conjugated diolefin will generally range from about 0.5 to 20 mole percent, preferably about 1 to about 7 mole percent, based on the total amount of ethylene and alpha-olefin present.

Representative examples of non-conjugated dienes that may be used as the third monomer in the terpolymer include:

a. Straight chain acyclic dienes such as: 1,4-hexadiene; 1,5-heptadiene; 1,6-octadiene.

b. Branched chain acyclic dienes such as: 5-methyl-1,4-hexadiene; 3,7-dimethyl 1,6octadiene; 3,7-dimethyl 1,7-octadiene; and the mixed isomers of dihydro-myrcene and dihydro-cymene.

c. Single ring alicyclic dienes such as: 1,4-cyclohexadiene; 1,5-cyclooctadiene; 1,5-cyclododecadiene; 4-vinylcyclohexene; 1-allyl-4-isopropylidene cyclohexane; 3-allyl-cyclopentene; 4-allyl-cyclohexene and 1-isopropenyl-4-(4-butenyl) cyclohexane.

d. Multi-single ring alicyclic dienes such as: 4,4′-dicyclopentenyl and 4,4′-dicyclohexenyl dienes.

e. Multi-ring alicyclic fused and bridged ring dienes such as: tetrahydroindene; methyl tetrahydroindene; dicyclopentadiene; bicyclo (2.2.1) hepta-2,5-diene; alkyl, alkenyl, alkylidene, cycloalkenyl and cycloalkylidene norbornenes such as: ethyl norbornene; 5-methylene-6-methyl-2-norbornene; 5-methylene-6,6-dimethyl-2-norbornene; 5-propenyl-2-norbornene; 5-(3-cyclopentenyl)2-norbornene and 5-cyclohexylidene-2-norbornene; norbornadiene; etc.

## CARBOXYLIC ACID MATERIAL

The carboxylic acid material which is grafted to or reacted with the ethylene copolymer to form the grafted ethylene copolymer is preferably ethylenically unsaturated, preferably monounsaturated, carboxylic acid material and can be either a monocarboxylic or dicarboxylic acid material. The dicarboxylic acid materials include (i) monounsaturated $C_4$ to $C_{10}$ dicarboxylic acid wherein (a) the carboxyl groups are vicinyl, i.e., located on adjacent carbon atoms, and (b) at least one, preferably both, of said adjacent carbon atoms are part of said monounsaturation; and (ii) derivatives of (i) such as anhydrides or $C_1$ to $C_5$ alcohol derived mono- or diesters of (i). Upon reaction with the ethylene copolymer the monounsaturation of the dicarboxylic acid, anhydride, or ester becomes saturated. Thus, for example, maleic anhydride becomes an ethylene copolymer substituted succinic anhydride.

The monocarboxylic acid materials include (i) monounsaturated $C_3$ to $C_{10}$ monocarboxylic acid wherein the carbon-carbon bond is conjugated to the carboxy group, i.e., of the structure

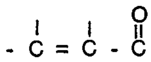 ; and

(ii) derivatives of (i) such as $C_1$ to $C_5$ alcohol derived monoesters of (i). Upon reaction with the ethylene copolymer, the monounsaturation of the monounsaturated carboxylic acid material becomes saturated. Thus, for example, acrylic acid becomes an ethylene copolymer substituted propionic acid, and methacrylic acid becomes an ethylene copolymer substituted isobutyric acid.

Exemplary of such unsaturated mono- and dicarboxylic acids, or anhydrides and thereof include fumaric acid, itaconic acid, maleic acid, maleic anhydride, chloromaleic anhydride, acrylic acid, methacrylic acid, crotonic acid, cinnamic acid, methyl acrylate, ethyl acrylate, methyl methacrylate, etc.

Preferred carboxylic acid materials are the dicarboxylic acid anhydrides. Maleic anhydride or a derivative thereof is particularly preferred as it does not appear to homopolymerize appreciably but grafts onto the ethylene copolymer to give two carboxylic acid functionalities. Such preferred materials have the generic formula

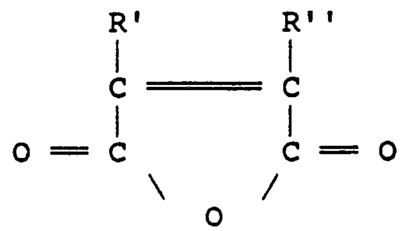

wherein $R'$ and $R''$ are independently hydrogen or a halogen.

Additionally, as taught by U.S. Patent Nos. 4,160,739 and 4,161,452, both of which are incorporated herein by reference, various unsaturated comonomers may be grafted on the ethylene copolymer together with the unsaturated carboxylic acid material. Such graft monomer systems may comprise one or a mixture of comonomers different from said unsaturated carboxylic acid material, and which contain only one copolymerizable double bond and are copolymerizable with said unsaturated acid component.

Typically, such comonomers do not contain free carboxylic acid groups and are esters containing alpha-ethylenic unsaturation in the acid or alcohol portion; hydrocarbons, both aliphatic and aromatic, containing , alpha-ethylenic unsaturation, such as the $C_4$-$C_{12}$ alpha olefins, for example hexene, nonene, dodecene, etc.; styrenes, for example styrene, alpha-methyl styrene, p-methyl styrene, butyl styrene, etc.; and vinyl monomers, for example vinyl acetate, vinyl chloride, vinyl ketones such as methyl and ethyl vinyl ketone, and nitrogen containing vinyl monomer such as vinyl pyridine and vinyl pyrrolidine, etc. Comonomers containing functional groups which may cause crosslinking, gelation or other interfering reactions should be avoided, although minor amounts of such comonomers (up to about 10% by weight of the comonomer system) often can be tolerated.

Specific useful copolymerizable comonomers include the following:

(A) Esters of saturated acids and unsaturated alcohols wherein the saturated acids may be monobasic or polybasic acids containing up to about 40 carbon atoms such as the following: acetic, propionic, butyric, valeric, caproic, stearic, oxalic, malonic, succinic, glutaric, adipic, pimelic. suberic, azelaic, sebacic, phthalic, isophthalic, terephthalic, hemimellitic, trimellitic, trimesic and the like. including mixtures. The unsaturated alcohols may be monohydroxy or polyhydroxy alcohols and may contain up to about 40 carbon atoms, such as the following: allyl, methallyl, crotyl, 1-chloroallyl, 2-chloroallyl, cinnamyl, vinyl, methyl vinyl, 1-phenallyl, butenyl, propargyl, 1-cyclohexene-3-ol, oleyl, and the like, including mixtures.

(B) Esters of unsaturated monocarboxylic acids containing up to about 12 carbon atoms such as acrylic, methacrylic and crotonic acid, and an esterifying agent containing up to about 50 carbon atoms, selected from saturated alcohols and alcohol epoxides. The saturated alcohols may preferably contain up to about 40 carbon atoms and include monohydroxy compounds such as: methanol, ethanol. propanol, butanol, 2-ethylhexanol, octanol, dodecanol, cyclohexanol, cyclopentanol, neopentyl alcohol, and benzyl alcohol; and alcohol ethers such as the monomethyl or monobutyl ethers of ethylene or propylene glycol, and the like, including mixtures. The alcohol epoxides include fatty alcohol epoxides, glycidol, and various derivatives of alkylene oxides, epichlorohydrin, and the like, including mixtures.

The components of the graft copolymerizable system are used in a ratio of unsaturated carboxylic acid material monomer component to comonomer component of about 1:4 to 4:1, preferably about 12 to 2:1 by

weight.

## GRAFTING OF THE ETHYLENE COPOLYMER

The grafting of the ethylene copolymer with the carboxylic acid material may be by any suitable method, such as thermally by the "ene" reaction, using copolymers containing unsaturation, such as ethylene-propylene-diene polymers either chlorinated or unchlorinated, or more preferably it is by free-radical induced grafting in solvent, preferably in a mineral lubricating oil as solvent.

The radical grafting is preferably carried out using free radical initiators such as peroxides, hydroperoxides, and azo compounds and preferably those which have a boiling point greater than about 100° C. and which decompose thermally within the grafting temperature range to provide said free radicals. Representative of these free-radical initiators are azobutyro-nitrile, 2,5-dimethyl-hex-3-yne-2, 5 bis-tertiary-butyl peroxide (sold. as Lupersol 130) or its hexane analogue, di-tertiary butyl peroxide and dicumyl peroxide. The initiator is generally used at a level of between about 0.005% and about 1%, based on the total weight of the polymer solution, and temperatures of about 150 to 220° C.

The ethylenically unsaturated carboxylic acid material, such as maleic anhydride, will be generally used in an amount ranging from about 0.01% to about 10%, preferably 0.1 to 2.0%, based on weight of the initial total solution. The aforesaid carboxylic acid material and free radical initiator are generally used in a weight percent ratio range of 1.0:1 to 30:1, preferably 3.0:1 to 6:1.

The initiator grafting is preferably carried out in an inert atmosphere, such as that obtained by nitrogen blanketing. While the grafting can be carried out in the presence of air, the yield of the desired graft polymer is generally thereby decreased as compared to grafting under an inert atmosphere substantially free of oxygen. The grafting time will usually range from about 0.1 to 12 hours, preferably from about 0.5 to 6 hours, more preferably 0.5 to 3 hours. The graft reaction will be usually carried out to at least approximately 4 times, preferably at least about 6 times the half-life of the free-radical initiator at the reaction temperature employed, e.g. with 2,5-dimethyl hex-3-yne-2, 5-bis(t-butyl peroxide) 2 hours at 160° C. and one hour at 170° C., etc.

In the grafting process, usually the copolymer solution is first heated to grafting temperature and thereafter said unsaturated carboxylic acid material and initiator are added with agitation, although they could have been added prior to heating. When the reaction is complete, the excess acid material can be eliminated by an inert gas purge, e.g. nitrogen sparging. Preferably the carboxylic acid material that is added is kept below its solubility limit in the polymer solution, e.g. below about 1 wt. %, preferably below 0.4 wt. % or less, of free maleic anhydride based on the total weight of polymer-solvent solution, e.g. ethylene copolymer mineral lubricating oil solution. Continuous or periodic addition of the carboxylic acid material along with an appropriate portion of initiator, during the course of the reaction, can be utilized to maintain the carboxylic acid below its solubility limits, while still obtaining the desired degree of total grafting.

In the initiator grafting step the maleic anhydride or other carboxylic acid material used will be grafted onto both the polymer and the solvent for the reaction. Many solvents such as dichlorobenzene are relatively inert and may be only slightly grafted, while mineral oil will tend to be more grafted. The exact split of graft between the substrate present depends upon the polymer and its reactivity, the reactivity and type of oil, the concentration of the polymer in the oil, and also upon the maintenance of the carboxylic acid material in solution during the course of the reaction and minimizing the presence of dispersed, but undissolved acid, e.g. the maleic anhydride. The undissolved acid material appears to have an increased tendency to react to form oil insoluble materials as opposed to dissolved acid material. The split between grafted oil and grafted polymer may be measured empirically from the infrared analyses of the product dialyzed into oil and polymer fractions.

The grafting is preferably carried out in a mineral lubricating oil which need not be removed after the grafting step but can be used as the solvent in the subsequent reaction of the graft polymer with the amine material and as a solvent for the end product to form the lubricating additive concentrate. The oil having attached, grafted carboxyl groups, when reacted with the amine material will also be converted to the corresponding derivatives.

The solution grafting step when carried out in the presence of a high temperature decomposable peroxide can be accomplished without substantial degradation of the chain length (molecular weight) of the ethylene containing polymer. This can be an advantage as opposed to high temperature thermal reactions which depend on degradation to apparently form free radical reactive sites. Measurement of molecular

weights and degradation can be evaluated by determination of the thickening efficiency (T.E.) of the polymer as will later be described.

The amount of carboxylic acid material used in the grafting reaction is an amount which is effective to provide a grafted ethylene copolymer which upon further reaction with at least one polyamine containing one primary amino group and one or more secondary amino groups as described hereinafter provides a material exhibiting the properties of a multifunctional viscosity index improver additive, more specifically a viscosity index improver-dispersant additive, i.e., a material having both V.I. improving and dispersancy properties in an oleaginous composition. That is to say, an amount which is effective to provide, upon reaction of the grafted ethylene copolymer with the polyamine, an oleaginous composition exhibiting improved viscometric and dispersancy properties. Generally, this amount of grafting material, e.g., moles of carboxylic acid material such as maleic anhydride, is an amount which is effective to provide a grafted ethylene copolymer, e.g., ethylene-alpha-olefin substituted carboxylic acid material such as ethylene-propylene substituted succinic anhydride, containing an average number of acid material moieties, e.g., succinic anhydride, grafted to or present on a 10,000 number average molecular weight segment of a mole of ethylene copolymer of at least about 0.1, preferably at least about 0.5, and more preferably at least about 1. The maximum average number of grafted moieties present per 10.000 average number molecular weight segment of a mole of ethylene copolymer backbone should not exceed about 10, preferably about 7 and more preferably about 5. Preferably, the average number, moles, of grafted moieties present per mole of ethylene copolymer backbone is at least about 0.6, preferably at least about 0.8, and more preferably at least about 1. Preferably, the maximum average number of grafted moieties grafted to or present per mole of ethylene copolymer backbone should generally not exceed about 10, preferably about 7, and more preferably about 5. Thus, for example, a mole of grafted ethylene copolymer, e.g., ethylene- propylene substituted succinic anhydride, containing an ethylene copolymer backbone such as an ethylene- propylene backbone having an average number molecular weight of 50,000 contains grafted to said backbone an average number of succinic anhydride moieties of from about 0.5 to about 50, preferably from about 0.6 to about 10. Typically, from about 0.2 to about 12, preferably from about 0.4 to about 6 moles of said carboxylic acid material are charged to the reactor per mole of ethylene copolymer charged.

Normally, not all of the ethylene copolymer reacts with the carboxylic acid material, e.g., maleic anhydride, to produce a grafted ethylene copolymer, e.g., ethylene-propylene substituted succinic anhydride. The resultant reaction product mixture, therefore, contains reacted or grafted ethylene copolymer, e.g., ethylene-propylene substituted succinic anhydride, unreacted or ungrafted ethylene copolymer, and unreacted grafting material, e.g., maleic anhydride. The unreacted ethylene copolymer is typically not removed from the reaction product mixture, and the reaction product mixture, generally stripped of any unreacted grafting material, is utilized as is or is employed for further reaction with the amine as described hereinafter.

Characterization of the average number of moles of carboxylic acid material, e.g., maleic anhydride, which have reacted per mole of ethylene copolymer charged to the reaction (whether it has undergone reaction or not) is defined herein as the average number of grafted moieties grafted to or present per mole of ethylene copolymer backbone. This number is defined solely with reference to the resulting reaction product mixture. Although the amount of said unreacted ethylene copolymer contained in the resulting reaction product mixture can be subsequently modified, i.e., increased or decreased by techniques known in the art, such modifications do not alter the average number of grafted moieties as defined above. The term grafted ethylene copolymer is intended to refer to the reaction product mixture whether it has undergone such modification or not.

## Polyamine

The polyamines containing one primary amino group and at least one secondary amino group are typically those that contain one primary amino group and from 1 to about 6 secondary amino groups. Preferably these polyamines contain no tertiary amino groups. These polyamines may also optionally contain an oxygen or sulfur atom. The amino groups, and the oxygen or sulfur if present, are separated from each other by hydrocarbylene groups, preferably alkylene groups, more preferably alkylene groups containing from 1 to about 6 carbon atoms.

These polyamines contain from 2 to about 7 nitrogens, from 7 (8 if an oxygen or sulfur is present) to about 80 carbons, and optionally a sulfur or oxygen atom. These polyamines include polyamines represented by the formula

$H_2N(R^1\text{-}NH)_z(R^2\text{-}A)_yR^3$ (I)

wherein:

$R^1$ is a hydrocarbylene group containing from 1 to about 6 carbons;

$R^2$ is a hydrocarbylene group containing from 1 to about 6 carbons;

$R^3$ is a hydrocarbyl group containing from 1 to about 40 carbons, preferably from 5 to about 30 carbons, and more preferably from about 10 to about 20 carbons;

z has a value of from 1 to 6, preferably 1 to 5, and more preferably 1 to 4;

y is zero or one: and

A is oxygen or sulfur.

Preferred hydrocarbyl radicals represented by $R^3$ are the aliphatic hydrocarbyl radicals, either saturated or unsaturated. The preferred aliphatic hydrocarbyl radicals are the acyclic aliphatic hydrocarbyl radicals, either saturated or unsaturated, straight chain or branched. The preferred aliphatic acyclic hydrocarbyl radicals are the alkyl radicals, either straight chain or branched, with the straight chain or slightly branched alkyl radicals being preferred.

Thus, $R^3$ is most preferably an alkyl radical containing from 1 to about 40 carbons, preferably from 5 to about 30 carbons, and more preferably from about 10 to about 20 carbons. Preferred alkyl radicals are the straight chain or slightly branched alkyl radicals.

Preferred hydrocarbylene radicals represented by $R^1$ and $R^2$ are the aliphatic hydrocarbylene radicals. Preferred aliphatic hydrocarbylene radicals are the acyclic aliphatic hydrocarbylene radicals. Of these, the alkylene radicals are preferred. The preferred alkylene radicals are those containing 2 to 4 carbon atoms. The most preferred alkylene radical is propylene.

The polyamines of the instant invention may contain an oxygen or a sulfur atom, i.e., they may be polyamine ethers or thioethers. In such case, y in Formula I is one, and these polyamine ethers or thioethers may be represented by the formula

$H_2N(R^1\text{-}NH)_z\ R^2\text{-}A\text{-}R^3$ (Ia)

wherein $R^1$, $R^2$, $R^3$, A and z are as defined.

Alternatively, the oxygen or sulfur atoms may be absent, and the polyamines contain only nitrogen, carbon and hydrogen atoms. In such case y in Formula I is 0 and these polyamines may be represented by the formula

$H_2N(R^1\text{-}NH)_z\ R^3$ (Ib)

These polyamines, including the polyamine ethers and thioethers, are known compounds which may be readily prepared by conventional methods. Some of these compounds are commercially available.

Some illustrative non-limiting examples of compounds of Formula Ib include:

$H_2N\text{-}CH_2CH_2CH_2NHCH_2CH_2CH_2NHCH_2CH_2CH_3$

$H_2N\text{-}CH_2CH_2CH_2NHCH_2CH_2CH_2NHCH_2(CH_2)_{\cdot 5}CH_3$;

$H_2N\text{-}CH_2CH_2\text{-}NH\text{-}CH_2CH_3$;

$H_2N(CH_2CH_2CH_2\text{-}NH)_3\ CH_2(CH_2)_8CH_3$;

$H_2N(CH_2CH_2CH_2\text{-}NH)_4\ CH_2(CH_2)_5CH_3$; and

$H_2N(CH_2CH_2\text{-}NH)_2\ CH_2(CH_2)_{\cdot 8}CH_3$

$H_2N(CH_2CH_2CH_2NH)_3\ CH_2(CH_2)_{10}CH_3$;

$H_2N(CH_2CH_2CH_2NH)_3\ CH_2(CH_2)_{12}CH_3$;

$H_2N(CH_2CH_2CH_2NH)_3\ CH_2(CH_2)_{14}CH_3$;

$H_2N(CH_2CH_2CH_2NH)_3\ CH_2(CH_2)_{15}CH_3$;

$H_2N(CH_2CH_2CH_2NH)_3\ CH_2(CH_2)_{16}CH_3$;

$H_2N(CH_2CH_2CH_2NH)_3\ CH_2(CH_2)_{\cdot 8}\text{-}CH_3$; and

$H_2N(CH_2CH_2CH_2NH)_3\ CH_2(CH2)_{20}\text{-}CH_3$

Some illustrative non-limiting examples of components of Formula Ia include:

$H_2N\text{-}CH_2CH_2CH_2NHCH_2CH_2CH_2NHCH_2CH_2CH_2\text{-}0\text{-}CH_2CH_2CH_3$;

$H_2N(CH_2CH_2CH_2NH)_4\ CH_2CH_2CH_2\text{-}S\text{-}CH_2CH_2CH_2CH_3$;

$H_2N(CH_2CH_2NH)_3\ CH_2CH_2CH_2\text{-}0\text{-}CH_2CH_2CH_2CH_2CH_3$;

$H_2N(CH_2CH_2CH_2NH)_z\ CH_2CH_2CH_2\text{-}0\text{-}CH_2(CH_2)_{10}CH_3$; and

$H_2N(CH_2CH_2CH_2NH)_2\ CH_2CH_2\text{-}S\text{-}CH_2CH_3$.

It is to be understood that mixtures of two or more different polyamines, as well as individual polyamines, may be used in the present invention.

It is generally preferable to employ mixtures of two or more different polyamines, particularly mixtures of polyamines wherein the only difference between the polyamines lies in $R^3$ being a different alkyl. Such a mixture, for example, may contain 5 different polyamines of Formula Ib wherein $R^1$ is propylene, z is 3, and $R^3$ is respectively dodecyl, tetradecyl, hexadecyl, heptadecyl, octadecyl and iocosyl. Such polyamines are referred to as tallow amines and are generally commercially available.

## REACTION OF GRAFTED ETHYLENE COPOLYMER WITH POLYAMINE

The grafted high molecular weight ethylene copolymer, preferably in solution, such as an oil solution, containing 5 to 95 wt.%, preferably 5 to 30 wt. %, and more preferably 10 to 20 wt.% of said grafted ethylene copolymer, is readily reacted with the polyamine by introducing the polyamine into said grafted ethylene copolymer containing solution and heating at a temperature of from about 100° C to 250° C, preferably from 125 to 175° C, for from about 1 to 10 hours, usually about 2 to about 6 hours. The heating is preferably carried out, in the case of ethylene copolymer substituted dicarboxylic acid material, to favor formation of imides or mixtures of imides and amides rather than amides and salts. In the case of ethylene copolymer substituted monocarboxylic acid material heating is preferably carried out to favor formation of amides rather than salts. Removal of water assures completion of the imidation/ amidation reaction. Reaction ratios can vary considerably, depending upon the reactants, amounts of excess, type of bonds formed, etc. Generally, sufficient grafted ethylene copolymer is used to provide from about 1 to 5, preferably from about 1.5 to 3 moles of ethylene copolymer substituted monocarboxylic or dicarboxylic acid moiety content, e.g., grafted succinic anhydride moieties, per equivalent of polyamine reactant, e.g., amine.

Preferably, the ethylene copolymer substituted mono- or dicarboxylic acid material and polyamine will be contacted for a time and under conditions sufficient to react substantially the primary nitrogen in the polyamine reactant. The progress of this reaction can be followed by infra-red analysis.

This reaction can be conducted in a polar or non-polar solvent, e.g., xylene, toluene, benzene, and the like, and is preferably conducted in the presence of a mineral or synthetic lubricating oil.

In another embodiment of the instant invention, the grafted high molecular weight ethylene copolymer is reacted with the polyamine and a carboxylic acid component or with the preformed reaction products, e.g., salts, amides, imides, of said polyamine and carboxylic acid component.

## CARBOXYLIC ACID COMPONENT

The carboxylic acid component includes: hydrocarbyl substituted dicarboxylic acid or anhydride, preferably succinic anhydride or acid, having 12 to 49 carbons, preferably 16 to 49 carbons in said hydrocarbyl group; long chain monocarboxylic acid of the formula RCOOH where R is a hydrocarbyl group of about 50 to about 400 carbons; and long chain hydrocarbyl substituted dicarboxylic acid or anhydride, preferably succinic anhydride or acid, having from about 50 to about 400 carbons in said hydrocarbyl group. The preferred carboxylic acid component is the long chain hydrocarbyl substituted dicarboxylic acid or anhydride, preferably succinic acid or anhydride, having from about 50 to about 400 carbon atoms in said hydrocarbyl group. Said hydrocarbyl groups are essentially aliphatic and include alkenyl and alkyl groups. The longer chain acids and anhydrides are preferred, particularly when the grafting reaction is carried out in lubricating oil.

The about $C_{50}$-$C_{400}$ hydrocarbyl subtituted dicarboxylic acid or anhydride includes the reaction product of the $C_{50}$-$C_{400}$ hydrocarbon polymer, generally a polyolefin, with (i) monounsaturated $C_4$ to $C_{10}$ dicarboxylic acid wherein (a) the carboxyl groups are vicinyl, i.e., located on adjacent carbon atoms, and (b) at least one, preferably both, of said adjacent carbon atoms are part of said monounsaturation; or with (ii) derivatives of (i) such as anhydrides of (i). Upon reaction with the hydrocarbon polymer, the monounsaturation of the dicarboxylic acid, anhydride, etc. becomes saturated. Thus for example, maleic anhydride becomes a hydrocarbyl substituted succinic anhydride.

Typically, from about 0.7 to about 4.0 (e.g., 0.8 to 2.6), preferably from about 1.0 to about 2.0, and most preferably from about 1.1 to about 1.7 moles of said unsaturated $C_4$ to $C_{10}$ dicarboxylic acid, anhydride or ester are charged to the reactor per mole of polyolefin charged.

Normally, not all of the polyolefin reacts with the unsaturated acid or derivative and the hydrocarbyl substituted dicarboxylic acid material will contain unreacted polyolefin. The unreacted polyolefin is typically not removed from the reaction mixture (because such removal is difficult and would be commercially infeasible) and the product mixture, stripped of any unreacted monounsaturated $C_4$ to $C_{10}$ dicarboxylic acid or anhydride, is employed as the carboxylic acid component.

Characterization of the average number of moles of dicarboxylic acid or anhydride, which have reacted per mole of polyolefin charged to the reaction (whether it has undergone reaction or not) is defined herein as functionality. Said functionality is based upon (i) determination of the saponification number of the resulting product mixture using potassium hydroxide; and (ii) the number average molecular weight of the

polymer charged, using techniques well known in the art. Functionality is defined solely with reference to the resulting product mixture. Although the amount of said reacted polyolefin contained in the resulting product mixture can be subsequently modified, i.e., increased or decreased by techniques known in the art, such modifications do not alter functionality as defined above. The term $C_{50}$-$C_{400}$ hydrocarbyl substituted dicarboxylic acid material is intended to refer to the product mixture whether it has undergone such modification or not.

Accordingly, the functionality of the $C_{50}$-$C_{400}$ hydrocarbyl substituted dicarboxylic acid material will be typically at least about 0.5, preferably at least about 0.8, and most preferably at least about 0.9 and will vary typically from about 0.5 to about 2.8 (e.g., 0.6 to 2), preferably from about 0.8 to about 1.4, and most preferably from about 0.9 to about 1.3.

Exemplary of such unsaturated dicarboxylic acids or anhydrides thereof are fumaric acid, itaconic acid, maleic acid, maleic anhydride, chloromaleic acid, chloromaleic anhydride, etc.

Preferred about $C_{50}$ to about $C_{400}$ olefin polymers for reaction with the unsaturated dicarboxylic acids or derivatives thereof are polymers comprising a major molar amount of $C_2$ to $C_{10}$, e.g., $C_2$ to $C_5$ monoolefin. Such olefins include ethylene, propylene, butylene, isobutylene, pentene, octene-1, styrene, etc. The polymers can be homopolymers such as polyisobutylene, as well as copolymers of two or more of such olefins such as copolymers of: ethylene and propylene; butylene and isobutylene; propylene and isobutylene; etc. Other copolymers include those in which a minor molar amount of the copolymer monomers, e.g., 1 to 10 mole %, is a $C_4$ to $C_{18}$ non-conjugated diolefin, e.g., a copolymer of isobutylene and butadiene; or a copolymer of ethylene, propylene and 1,4-hexadiene; etc.

In some cases, the olefin polymer may be completely saturated, for example an ethylene-propylene copolymer made by a Ziegler-Natta synthesis usig hydrogen as a moderator to control molecular weight.

The olefin polymers used will usually have number average molecular weights within the range of about 700 and about 5,600, more usually between about 800 and about 3000. Particularly useful olefin polymers have number average molecular weights within the range of about 900 and about 2500 with approximately one terminal double bond per polymer chain. An especially useful starting material is polyisobutylene. The number average molecular weight for such polymers can be determined by several known techniques. A convenient method for such determination is by gel permeation chromatography (GPC) which additionally provides molecular weight distribution information, see W. W. Yau, J. J. Kirkland and D> D. Bly, "Modern Size Exclusion Liquid Chromatography", John WIley and Sons, New York, 1979.

Processes for reacting the about $C_{50}$ to about $C_{400}$ olefin polymer with the $C_{4-10}$ unsaturated dicarboxylic acid or anhydride are known in the art. For example, the olefin polymer and the dicarboxylic acid or derivative may be simply heated together as disclosed in U.S. Patents 3,361,673 and 3,401,118 to cause a thermal "ene" reaction to take place. Or, the olefin polymer can be first halogenated, for example, chlorinated or brominated to about 1 to 8 wt. %, preferably 3 to 7 wt. % chlorine, or bromine, based on the weight of polymer, by passing the chlorine or bromine through the polyolefin at a temperature of 60 to 250°C, e.g. 120 to 160°C, for about 0.5 to 10, preferably 1 to 7 hours. The halogenated polymer may then be reacted with sufficient unsaturated acid or derivative at 100 to 250°C, usually about 180 to 235°C, for about 0.5 to 10, e.g. 3 to 8 hours, so the product obtained will contain the desired number of moles of the unsaturated acid or derivative per mole of the halogenated polymer. Processes of this general type are taught in U.S. Patents 3,087,936; 3,172,892; 3,272,74 6 and others.

Alternatively, the olefin polymer, and the unsaturated acid or derivative are mixed and heated while adding chlorine to the hot material. Processes of this type are disclosed in U.S. Patents 3,215,707; 3,231,587; 3,912, 764; 4,110, 349; and in U.K. 1,550,219.

By the use of halogen, about 65 to 95 wt. % of the polyolefin, e.g. polyisobutylene will normally be reacted with the dicarboxylic acid or derivative. Upon carrying out a thermal reaction without the use of halogen or a catalyst, then usually only about 50 to 75 wt. % of the polyisobutylene will react. Chlorination helps increase the reactivity.

Particularly preferred as the acid component is polyisobutenyl succinic anhydride.

## PRE-REACTED POLYAMINE-CARBOXYLIC ACID COMPONENT

The aforedescribed polyamine and carboxylic acid component may be pre-reacted, with the acid being generally attached to the polyamine through salt, imide, amide, or other linkages so that a primary or secondary amine group of the polyamine is still available for reaction with the acid moieties of the grafted high molecular weight ethylene copolymer.

The grafted high molecular weight ethylene copolymer is reacted with the polyamine and carboxylic acid component or pre-reacted polyamine-carboxylic acid component substantially as described hereinafore for the reaction of the grafted high molecular weight ethylene copolymer with the polyamine. Thus, for example a reaction mixture containing the grafted high molecular weight ethylene copolymer, e.g., ethylene-propylene substituted succinic anhydride, and carboxylic acid component, e.g., polyisobutylene substituted succinic anhydride, is prepared by admixing these two reactants, and the polyamine is then introduced into this reaction mixture and the reaction is carried out as described hereinafore. Alternatively, the carboxylic acid component and polyamine may be added substantially simultaneously to a reaction mixture containing the grafted high molecular weight ethylene copolymer.

Generally, the amount of the carboxylic acid component utilized is an amount sufficient to provide about 0.5 to about 4, preferably from about 1 to about 2 moles of said carboxylic acid component per molar amount of the carboxylic acid moieties present in the grafted ethylene copolymer. For example, with a grafted ethylene-propylene copolymer of about 40,000 $\overline{M}_n$, i.e., a thickening efficiency of about 2.1 g and averaging 4 succinic anhydride groups per molecule, about 4 moles of polyisobutenyl succinic anhydride would preferably be used per mole of grafted copolymer. Generally, from about 1 to 5, preferably from about 1.5 to 3 moles of the combined carboxylic acid moiety content of the grafted ethylene copolymer and the carboxylic acid content are used per equivalent of polyamine reactant, e.g., amine.

The compositions of matter of the instant invention, i.e., grafted ethylene copolymers reacted with the polyamine, can be post-treated with a variety of materials, particularly acid materials, to inactivate any remaining primary or secondary amino groups of the adduct and thereby prevent crosslinking and gellation of the adduct. Thus, for example, the adduct may be post-reacted or post-treated with $C_1$ - $C_{30}$ monocarboxylic acids or anhydrides, preferably acetic anhydride, or unsubstituted or $C_1$ - $C_{30}$ monocarboxylic monocarboxylic acids or anhydrides, preferably acetic anhydride, or unsubstituted or $C_1$ to $C_{28}$ hydrocarbyl substituted dicarboxylic acid anhydrides as disclosed in U.S. Patent No. 4,137,185, incorporated herein by reference; the sulfonic acids of U.S. Patent No. 4,144,181, incorporated herein by reference; and the $C_{12}$ to about $C_{18}$ hydrocarbyl substituted dicarboxylic anhydrides of U.S. Patent No. 4,803,003, incorporated herein by reference.

The multifunctional viscosity index improvers of this invention can be used alone or in admixture with other viscosity index improvers or dispersants. The other viscosity index improvers or viscosity modifiers are generally high molecular weight hydrocarbon polymers including polyesters. These other viscosity modifiers may also be derivatized, as by grafting with a carboxylic acid material of the type described hereinafore and thereafter reacting with a polyamine of the type described hereinafore as a polyol, to include other properties or functions, such as the addition of dispersancy properties. These oil soluble viscosity modifying polymers will generally have number average molecular weights of from $10^3$ to $10^6$, preferably $10^4$ to $10^6$, e.g., 20,000 to 250,000, as determined by gel permeation chromatography or osmometry.

Examples of suitable hydrocarbon polymers include homopolymers and copolymers of two or more monomers of $C_2$ to $C_{30}$, e.g. $C_2$ to $C_8$ olefins, including both alpha olefins and internal olefins, which may be straight or branched, aliphatic, aromatic, alkyl-aromatic, cycloaliphatic, etc. Frequently they will be of ethylene with $C_3$ to $C_{30}$ olefins, particularly preferred being the copolymers of ethylene and propylene. Other polymers can be used such as polyisobutylenes, homopolymers and copolymers of $C_6$ and higher alpha olefins, atactic polypropylene, hydrogenated polymers and copolymers and terpolymers of styrene, e.g. with isoprene and/or butadiene and hydrogenated derivatives thereof. The polymer may be degraded in molecular weight, for example by mastication, extrusion, oxidation or thermal degradation, and it may be oxidized and contain oxygen. Also included are derivatized polymers such as post-grafted interpolymers of ethylene-propylene with an active monomer such as maleic anhydride which may be further reacted with an alcohol, or amine, e.g. an alkylene polyamine or hydroxy amine, e.g. see U.S. Patent Nos. 4,089,794; 4,160,739; 4,137,185; or copolymers of ethylene and propylene reacted or grafted with nitrogen compounds such as shown in U.S. Patent Nos. 4,068,056; 4,068,058; 4,146,489 and 4,149,984.

The preferred hydrocarbon polymers are ethylene copolymers containing from 15 to 90 wt.% ethylene, preferably 30 to 80 wt.% of ethylene and 10 to 85 wt.%, preferably 20 to 70 wt.% of one or more $C_3$ to $C_{28}$, preferably $C_3$ to $C_{18}$, more preferably $C_3$ to $C_8$, alpha-olefins. While not essential, such copolymers preferably have a degree of crystallinity of less than 25 wt.%, as determined by X-ray and differential scanning calorimetry. Copolymers of ethylene and propylene are most preferred. Other alpha-olefins suitable in place of propylene to form the copolymer, or to be used in combination with ethylene and propylene, to form a terpolymer, tetrapolymer, etc. , include 1-butene, 1-pentene, 1-hexene, 1-heptene, 1-octene, 1-nonene, 1-decene, etc.; also branched chain alpha-olefins, such as 4-methyl-1-pentene, 4-methyl-1-hexene, 5-methylpentene-1, 4,4-dimethyl-1-pentene, and 6-methylheptene-1, etc., and mixtures thereof.

Terpolymers, tetrapolymers, etc., of ethylene, said $C_{3-28}$ alpha-olefin, and a non-conjugated diolefin or mixtures of such diolefins may also be used. The amount of the non-conjugated diolefin generally ranges from about 0.5 to 20 mole percent, preferably from about 1 to about 7 mole percent, based on the total amount of ethylene and alpha-olefin present.

The polyester V.I. improvers are generally polymers of esters of ethylenically unsaturated $C_3$ to $C_8$ mono- and dicarboxylic acids such as methacrylic and acrylic acids, maleic acid, maleic anhydride, fumaric acid, etc.

Examples of unsaturated esters that may be used include those of aliphatic saturated mono alcohols of at least 1 carbon atom and preferably of from 12 to 20 carbon atoms, such as decyl acrylate, lauryl acrylate, stearyl acrylate, eicosanyl acrylate, docosanyl acrylate, decyl methacrylate, diamyl fumarate, lauryl methacrylate, cetyl methacrylate, stearyl methacrylate, and the like and mixtures thereof.

Other esters include the vinyl alcohol esters of $C_2$ to $C_{22}$ fatty or mono carboxylic acids, preferably saturated such as vinyl acetate, vinyl laurate, vinyl palmitate, vinyl stearate, vinyl oleate, and the like and mixtures thereof. Copolymers of vinyl alcohol esters with unsaturated acid esters such as the copolymer of vinyl acetate with dialkyl fumarates, can also be used.

The esters may be copolymerized with still other unsaturated monomers such as olefins, e.g. 0.2 to 5 moles of $C_2$ - $C_{20}$ aliphatic or aromatic olefin per mole of unsaturated ester, or per mole of unsaturated acid or anhydride followed by esterification. For example, copolymers of styrene with maleic anhydride esterified with alcohols and amines are known, e.g., see U.S. Patent 3,702,300.

Such ester polymers may be grafted with, or the ester copolymerized with, polymerizable unsaturated nitrogen-containing monomers to impart dispersancy to the V.I. improvers. Examples of suitable unsaturated nitrogen-containing monomers include those containing 4 to 20 carbon atoms such as amino substituted olefins as p-(beta-diethylaminoethyl)styrene; basic nitrogen-containing heterocycles carrying a polymerizable ethylenically unsaturated substituent, e.g. the vinyl pyridines and the vinyl alkyl pyridines such as 2-vinyl-5-ethyl pyridine, 2-methyl-5-vinyl pyridine, 2-vinyl-pyridine, 4-vinyl-pyridine, 3-vinyl-pyridine, 3-methyl-5-vinyl-pyridine, 4-methyl-2-vinyl-pyridine, 4-ethyl-2-vinyl-pyridine and 2-butyl-1-5-vinyl-pyridine and the like.

N-vinyl lactams are also suitable, e.g. N-vinyl pyrrolidones or N-vinyl piperidones.

The vinyl pyrrolidones are preferred and are exemplified by N-vinyl pyrrolidone, N-(1-methylvinyl) pyrrolidone, N-vinyl-5-methyl pyrrolidone, N-vinyl-3, 3-dimethylpyrrolidone, N-vinyl-5-ethyl pyrrolidone, etc.

Dispersants maintain oil insolubles, resulting from oxidation during use, in suspension in the fluid thus preventing sludge flocculation and precipitation as deposition on metal parts. Suitable dispersants include alkyl succinimides, the reaction product of oil-soluble polyisobutylene succinic anhydride with polyamines such as tetraethylene pentamine, and borated salts thereof. Such dispersants are disclosed, inter alia, in Belgium Patent No. 658,236 and U.S. Patent No. 3,272,746.

Other dispersants include the esters derived from long chain hydrocarbon substituted dicarboxylic acid material and hydroxy compounds such as monohydric and polyhydric alcohols or aromatic compounds such as phenols and naphthols, etc. The polyhydric alcohols are the most preferred hydroxy compound and preferably contain from 2 to about 10 hydroxy radicals, for example, ethylene glycol, diethylene glycol, triethylene glycol, tetraethylene glycol, dipropylene glycol, and other alkylene glycols in which the alkylene radical contains from 2 to about 8 carbon atoms. Other useful polyhydric alcohols include glycerol, monooleate of glycerol, monostearate of glycerol, monomethyl ether of glycerol, pentaerythritol, dipentaerythritol, and mixtures thereof.

The ester dispersant may also be derived from unsaturated alcohols such as allyl alcohol, cinnamyl alcohol, propargyl alcohol, 1-cyclohexane-3-ol, and oleyl alcohol. Still other classes of the alcohols capable of yielding the esters of this invention comprise the ether-alcohols and amino-alcohols including, for example, the oxy-alkylene, oxy-arylene-, amino-alkylene-, and amino-arylene-substituted alcohols having one or more oxy-alkylene, amino-alkylene or amino-arylene oxy-arylene radicals. They are exemplified by Cellosolve, Carbitol, N,N,N′,N′-tetrahydroxy-trimethylene di-amine, and ether-alcohols having up to about 150 oxy-alkylene radicals in which the alkylene radical contains from 1 to about 8 carbon atoms.

The ester dispersant may be di-esters of dicarboxylic acids (e.g., succinic acid or anhydride) or acidic esters, i.e., partially esterified succinic acids; as well as partially esterified polyhydric alcohols or phenols, i.e., esters having free alcohols or phenolic hydroxyl radicals. Mixtures of the above illustrated esters likewise are contemplated within the scope of this invention.

The ester dispersant may be prepared by one of several known methods as illustrated for example in U.S. Patent 3,381,022. The ester dispersants may also be borated, similar to the nitrogen containing dispersants.

Hydroxyamines which can be reacted with the polymer-substituted monocarboxylic acid materials to

form dispersants include 2-amino-1-butanol, 2-amino-2-methyl-1-propanol, p-(beta-hydroxyethyl)-aniline, 2-amino-1-propanol, 3-amino-1-propanol, 2-amino-2-methyl-1, 3-propane-diol, 2-amino-2-ethyl-1, 3-propanediol, N-(beta-hydroxy-propyl)-N′-(beta-aminoethyl)-piperazine, tris(hydroxymethyl) amino-methane (also known as trismethylolaminomethane), 2-amino-1-butanol, ethanolamine, beta-(beta-hydroxyethoxy)-ethylamine, and the like. Mixtures of these or similar amines can also be employed. The above description of nucleophilic reactants suitable for reaction with the polymer-substituted monocarboxylic acid materials includes amines, alcohols, and compounds of mixed amine and hydroxy containing reactive functional groups, i.e., amino-alcohols.

The tris(hydroxymethyl) amino methane (THAM) can be reacted with the aforesaid acid materials to form amides, imides or ester type additives as taught by U.K. 984,409, or to form oxazoline compounds and borated oxazoline compounds as described, for example, in U.S. 4,102,798; 4,116,876 and 4,113,639.

The multifunctional viscosity index improvers of the present invention can be incorporated into a lubricating oil in any convenient way. Thus, they can be added directly to the oil by dispersing or dissolving the same in the oil at the desired level of concentration of the multifunctional viscosity index improvers. Such blending into the additional tube oil can occur at room temperature or elevated temperatures. Alternatively, the multifunctional viscosity index improvers can be blended with a suitable oil-soluble solvent and base oil to form a concentrate, and then blending the concentrate with a lubricating oil basestock to obtain the final formulation. Such multifunctional viscosity index improver concentrates will typically contain (on an active ingredient (A.I.) basis) from about 3 to about 45 wt.%, and preferably from about 10 to about 35 wt.%, multifunctional viscosity index improver additive, and typically from about 30 to 90 wt.%, preferably from about 40 to 60 wt.%, base oil, based on the concentrate weight.

The lubricating oil basestock for the multifunctional viscosity index improver typically is adapted to perform a selected function by the incorporation of additional additives therein to form lubricating oil compositions (i.e., formulations).

The amounts of the multifunctional viscosity improver additives of the instant invention which are incorporated into an oleaginous composition, e.g., lubricating oil, is an amount which is effective to improve the viscometric properties, e.g., viscosity index, of said oleaginous composition and impart dispersancy thereto, i.e., a viscosity improving and dispersant effective amount. Generally, this amount is from about 0.01 to about 20, preferably from about 0.1 to about 15, and more preferably from about 0.2 to about 5 weight percent, based on the weight of the oleaginous composition.

The oleaginous composition into which the multifunctional viscosity improvers or modifiers of the instant invention are incorporated or added include lubricating oil compositions, e.g., automatic transmission fluids, heavy duty oils suitable for gasoline and diesel engines, etc.

The multifunctional viscosity improvers of this invention may be added to the oleaginous composition in the form of an oil concentrate. Typically such oil concentrate contains from about 5 wt.% up to about 49 wt.%, preferably 7 to 25 wt.%, of the multifunctional viscosity improver in oil, e.g., mineral lubricating oil.

The fully formulated oil compositions, or the oil concentrate, may optionally contain other conventional additives such as pour point depressants, antiwear agents, antioxidants, other viscosity index improvers, dispersants, corrosion inhibitors, anti-foaming agents, detergents, rust inhibitors, friction modifiers, and the like.

Corrosion inhibitors, also known as anti-corrosive agents, reduce the degradation of the metallic parts contacted by the lubricating oil composition. Illustrative of corrosion inhibitors are phosphosulfurized hydrocarbons and the products obtained by reaction of a phosphosulfurized hydrocarbon with an alkaline earth metal oxide or hydroxide, preferably in the presence of an alkylated phenol or of an alkylphenol thioester, and also preferably in the presence of carbon dioxide.

Other oxidation inhibitors or antioxidants useful in this invention comprise oil-soluble copper compounds. The copper may be blended into the oil as any suitable oil soluble copper compound. By oil soluble it is meant that the compound is oil soluble under normal blending conditions in the oil or additive package. The copper compound may be in the cuprous or cupric form. The copper may be in the form of the copper dihydrocarbyl thio- or dithio-phosphates. Alternatively, the copper may be added as the copper salt of a synthetic or natural carboxylic acid. Examples of same thus include $C_{10}$ to $C_{18}$ fatty acids, such as stearic or palmitic acid, but unsaturated acids such as oleic or branched carboxylic acids such as napthenic acids of molecular weights of from about 200 to 500, or synthetic carboxylic acids, are preferred, because of the improved handling and solubility properties of the resulting copper carboxylates. Also useful are oil-soluble copper dithiocarbamates of the general formula $(RR_1NCSS)nCu$ (where n is 1 or 2 and R and $R_1$ are the same or different hydrocarbyl radicals containing from 1 to 18, and preferably 2 to 12, carbon atoms, and including radicals such as alkyl, alkenyl, aryl, aralkyl, alkaryl and cycloaliphatic radicals. Particularly preferred as R and $R_1$ groups are alkyl groups of from 2 to 8 carbon atoms. Thus, the radicals may, for

example, be ethyl, n-propyl, i-propyl, n-butyl, i-butyl, sec-butyl, amyl, n-hexyl, i-hexyl, n-heptyl, n-octyl, decyl, dodecyl, octadecyl, 2-ethylhexyl, phenyl, butylphenyl, cyclohexyl, methylcyclopentyl, propenyl, butenyl, etc. In order to obtain oil solubility, the total number of carbon atoms (i.e., R and R.) will generally be about 5 or greater. Copper sulphonates, phenates, and acetylacetonates may also be used.

Exemplary of useful copper compounds are copper CuI and/or CuII salts of alkenyl succinic acids or anhydrides. The salts themselves may be basic, neutral or acidic. They may be formed by reacting (a) polyalkylene succinimides (having polymer groups of $\overline{M}_n$ of 700 to 5,000) derived from polyalkylenepolyamines, which have at least one free carboxylic acid group, with (b) a reactive metal compound. Suitable reactive metal compounds include those such as cupric or cuprous hydroxides, oxides, acetates, borates, and carbonates or basic copper carbonate.

Examples of these metal salts are Cu salts of polyisobutenyl succinic anhydride, and Cu salts of polyisobutenyl succinic acid. Preferably, the selected metal employed is its divalent form, e.g., $Cu^{+2}$. The preferred substrates are polyalkenyl succinic acids in which the alkenyl group has a molecular weight greater than about 700. The alkenyl group desirably has a $M_n$ from about 900 to 1,400, and up to 2,500, with a $M_n$ of about 950 being most preferred. Especially preferred is polyisobutylene succinic anhydride or acid. These materials may desirably be dissolved in a solvent, such as a mineral oil, and heated in the presence of a water solution (or slurry) of the metal bearing material. Heating may take place between 70, and about 200° C. Temperatures of 110° C to 140° C are entirely adequate. It may be necessary, depending upon the salt produced, not to allow the reaction to remain at a temperature above about 140° C for an extended period of time, e.g., longer than 5 hours, or decomposition of the salt may occur.

The copper antioxidants (e.g., Cu-polyisobutenyl succinic anhydride, Cu-oleate, or mixtures thereof) will be generally employed in an amount of from about 50 to 500 ppm by weight of the metal, in the final lubricating or fuel composition.

Friction modifiers serve to impart the proper friction characteristics to lubricating oil compositions such as automatic transmission fluids.

Representative examples of suitable friction modifiers are found in U.S. Patent No. 3,933,659 which discloses fatty acid esters and amides; U.S. Patent No. 4,176,074 which describes molybdenum complexes of polyisobutenyl succinic anhydride-amino alkanols; U.S. Patent No. 4,105,571 which discloses glycerol esters of dimerized fatty acids; U.S. Patent No. 3,779,928 which discloses alkane phosphonic acid salts; U.S. Patent No. 3,778,375 which discloses reaction products of a phosphonate with an oleamide; U.S. Patent No. 3,852,205 which discloses S-carboxyalkylene hydrocarbyl succinimide, S-carboxyalkylene hydrocarbyl succinamic acid and mixtures thereof; U.S. Patent No. 3,879,306 which discloses N-(hydroxyalkyl)alkenyl-succinamic acids or succinimides; U.S. Patent No. 3,932,290 which discloses reaction products of di- (lower alkyl) phosphites and epoxides; and U.S. Patent No. 4,028,258 which discloses the alkylene oxide adduct of phosphosulfurized N-(hydroxyalkyl) alkenyl succinimides. The disclosures of the above references are herein incorporated by reference. The most preferred friction modifiers are succinate esters, or metal salts thereof, of hydrocarbyl substituted succinic acids or anhydrides and thiobis-alkanols such as described in U.S. Patent No. 4,344,853.

Pour point depressants, otherwise known as lube oil flow improvers, lower the temperature at which the fluid will flow or can be poured. Such additives are well known. Typically of those additives which usefully optimize the low temperature fluidity of the fluid are $C_8$-$C_{18}$ dialkylfumarate vinyl acetate copolymers, polymethacrylates, and wax naphthalene. Foam control can be provided by an antifoamant of the polysiloxane type, e.g., silicone oil and polydimethyl siloxane.

Anti-wear agents, as their name implies, reduce wear of metal parts. Representatives of conventional antiwear agents are zinc dialkyldithiophosphate and zinc diaryldithiosphate.

Detergents and metal rust inhibitors include the metal salts of sulphonic acids, alkyl phenols, sulfurized alkyl phenols, alkyl salicylates, naphthenates and other oil soluble mono- and di-carboxylic acids. Highly basic (viz, overbased) metal salts, such as highly basic alkaline earth metal sulfonates (especially Ca and Mg salts) are frequently used as detergents. Representative examples of such materials, and their methods of preparation, are found in EP-A-0208560.

Some of these numerous additives can provide a multiplicity of effects, e.g., a dispersant-oxidation inhibitor. This approach is well known and need not be further elaborated herein.

Compositions when containing these conventional additives are typically blended into the base oil in amounts which are effective to provide their normal attendant function. Representative effective amounts of such additives are illustrated as follows:

| Additive | Wt.% a.i. | Wt. % a.i. |
| --- | --- | --- |
| | (Broad) | (Preferred) |
| Viscosity Modifier | .01-12 | .01-4 |
| Corrosion Inhibitor | 0.01-5 | .01-1.5 |
| Oxidation Inhibitor | 0.01-5 | .01-1.5 |
| Dispersant | 0.1-20 | 0.1-8 |
| Pour Point Depressant | 0.01-5 | .01-1.5 |
| Anti-Foaming Agents | 0.001-3 | .001-0.15 |
| Anti-Wear Agents | 0.001-5 | .001-1.5 |
| Friction Modifiers | 0.01-5 | .01-1.5 |
| Detergents/Rust Inhibitors | .01-10 | .01-3 |
| Mineral Oil Base | Balance | Balance |

When other additives are employed, it may be desirable, although not necessary, to prepare additive concentrates comprising concentrated solutions or dispersions of the multifunctional viscosity improver (in concentrate amounts hereinabove described), together with one or more of said other additives (said concentrate when constituting an additive mixture being referred to here in as an additive package) whereby several additives can be added simultaneously to the base oil to form the lubricating oil composition. Dissolution of the additive concentrate into the lubricating oil may be facilitated by solvents and by mixing accompanied with mild heating, but this is not essential. The concentrate or additive-package will typically be formulated to contain the dispersant additive and optional additional additives in proper amounts to provide the desired concentration in the final formulation when the additive-package is combined with a predetermined amount of base lubricant. Thus, the products of the present invention can be added to small amounts of base oil or other compatible solvents along with other desirable additives to form additive-packages containing active ingredients in collective amounts of typically from about 2.5 to about 80%, and preferably from about 5 to about 60%, and most preferably from about 8 to about 49% by weight additives in the appropriate proportions with the remainder being base oil.

The final formulations may employ typically about 10 wt. % of the additive-package with the remainder being base oil.

All of said weight percents expressed herein are based on active ingredient (a.i.) content of the additive, and/or upon the total weight of any additive-package, or formulation which will be the sum of the a.i. weight of each additive plus the weight of total oil or diluent.

The instant compositions of matter useful as multifunctional viscosity modifiers or improvers are oil-soluble, dissolvable in oil with the aid of a suitable solvent, or are stably dispersible materials. Oil-soluble, dissolvable, or stably dispersible as that terminology is used herein does not necessarily indicate that the materials are soluble, dissolvable, miscible, or capable of being suspended in oil in all proportions. It does mean, however, that the additives, for instance, are soluble or stably dispersible in oil to an extent sufficient to exert their intended effect in the environment in which the oil is employed. Moreover, the additional incorporation of other additives may also permit incorporation of higher levels of a particular copolymer hereof, if desired.

The following Examples illustrate the preparation of the nitrogen containing carboxylic acid material grafted ethylene propylene copolymers of the instant invention.

## EXAMPLE 1

Into a reactor vessel are charged 150 grams of about 23 wt. % oil solution (containing about 23 wt. % of grafted copolymer) of succinic-anhydride grafted ethylene-propylene copolymer (containing about 43 wt.% ethylene and 57% wt.% propylene, the ethylene-propylene backbone having a $\overline{M}_n$ of about 80,000, and having a thickening efficiency of about 1.2), 230.6 grams of S130N mineral oil, and 7.3 grams of tallow tetramine (mixture of N-$C_{16}$ to N-$C_{20}$ alkyl tripropylene-tetraamine). The reactor vessel is blanketed with nitrogen and the reaction mixture heated to 190°C for two hours with stirring. The reaction mixture is nitrogen stripped for two hours at 190°C. The 12% product solution has a kinematic viscosity of 2099.5 centistokes.

## EXAMPLE 2

The procedure of Example 1 is substantially repeated except that the 7.13 grams of the tallow tetraamine are replaced with 4.4 grams of N-isodecyloxypropyl-1,3-diaminopropane.

The following comparative Example illustrates nitrogen containing carboxylic acid material grafted ethylene-propylene copolymer falling outside the scope of the instant invention in that the polyamine reactant is different from the polyamines of the instant invention containing one primary amine and one or more secondary amine groups. This Comparative Example is presented for comparative purposes only.

## COMPARATIVE EXAMPLE 3

The procedure of Example 1 is substantially repeated except that the 7.13 grams of tallow tetraamine are replaced with about 2 grams of N-aminopropylmorpholine.

Three lubricating oil compositions were prepared using the nitrogen containing carboxylic acid material grafted ethylene-propylene copolymer MFVI of Examples 1-2 and Comparative Example 3. Lubricating oil compositions A and B contain the MFVIs of Examples 1 and 2 respectively while lubricating oil composition C contains the conventional MFVI of Comparative Example 3. These lubricating oil compositions were then tested for sludge inhibition (via the SIB test) and varnish inhibition (via the VIB test), as described below

The SIB test has been found, after a large number of evaluations, to be an excellent test for assessing the dispersing power of lubricating oil dispersant additives.

The medium chosen for the SIB test was a used crankcase mineral lubricating oil composition having an original viscosity of about 325 SUS at 38° C that had been used in a taxicab that was driven generally for short trips only, thereby causing a buildup of a high concentration of sludge precursors. The oil that was used contained only a refined base mineral lubricating oil, a viscosity index improver, a pour point depressant and zinc dialkyldithiophosphate anti-wear additive. The oil contained no sludge dispersant. A quantity of such used oil was acquired by draining and refilling the taxicab crankcase at 1000-2000 mile intervals.

The SIB test is conducted in the following manner: the aforesaid used crankcase oil, which is milky brown in color, is freed of sludge by centrifuging for one hour at about 39,000 grvities (gs.). The resulting clear bright red supernatant oil is then decanted from the insoluble sludge particles thereby separated out. However, the supernatant oil still contains oil-soluble sludge precursors which on heating under the conditions employed by this test will tend to form additional oil-insoluble deposits of sludge. The sludge inhibiting properties of the additives being tested are determined by adding to portions of the supernatant used oil, a small amount, such as 0.5, 1 or 2 weight percent, of the particular additive being tested. Ten grams of each blend being tested are placed in a stainless steel centrifuge tube and are heated at 135° C for 16 hours in the presence of air. Following the heating, the tube containing the oil being tested is cooled and then centrifuged for about 30 minutes at room temperature at about 39,000 gs. Any deposits of new sludge that form in this step are separated from the oil by decanting the supernatant oil and then carefully washing the sludge deposits with 25 ml of heptane to remove all remaining oil from the sludge and further centrifuging. The weight of the new solid sludge that has been formed in the test, in milligrams, is determined by drying the residue and weighing it. The resuls are reported as amount of precipitated sludge in comparison with the precipitated sludge of a blank not containing any additional additive, which blank is normalized to a rating of 10. The less new sludge precipitated in the presence of the additive, the lower the SIB value and the more effective is the additive as a sludge dispersant. In other words, if the additive gives half as much precipitated sludge as the blank, then it would be rated 5.0 since the blank will be normalized to 10.

The VIB test was used to determine varnish inhibition. Here, each test sample consisted of 10 grams of lubricating oil containing a small amount of the additive being tested. The test oil to which the additive is admixed is of the same type a used in the above-described SIB test. Each ten gram sample was heat soaked overnight at about 140° C and thereafter centrifuged to remove the sludge. The supernatant fluid of each sample was subjected to heat cycling from about 150° to room temperature over a period of 3.5 hours at a frequency of about 2 cycles per minute. During the heating phase, gas which was a mixture of about 0.7 volume percen $SO_2$, 1.4 volume percent NO and balance air was bubbled through the test samples. During the cooling phase, water vapor was bubbled through the test samples. At the end of the test period, which testing cycle can be repeated as necessary to determine the inhibiting effect of any

additive, the wall surfaces of the test flasks in which the samples were contained are visually evaluated as to the varnish inhibition. The amount imposed on the walls is rated to values of from 1 to 11 with the higher number being the greater amount of varnish, in comparison with a blank with no additive that was rated 11.

10.00 grams of SIB test oil were mixed with 0.05 grams of the products of the Examples as described in Table I and tested in the aforedescribed SIB and VIB tests.

The test results are summarized below in Table I.

TABLE 1

| ADDITIVE | SIB | VIB |
|---|---|---|
| Example 1 | 5.35 | 3 |
| Example 2 | 5.12 | 4 |
| Comparative Example 3 | 6.65 | 4 |

As illustrated by the data in Table I the multifunctional viscosity index improvers of this invention, prepared from polyamines containing one primary amino group and at least one secondary amino group, exhibit excellent SIB and VIB performance.

Another aspect of the instant invention comprises utilizing as the polyamines mixtures comprised of (I) one or more polyamines of the instant invention, i.e., polyamines containing only one primary amino group and one or more secondary amino groups, and (II) conventional polyamines. These conventional polyamines are described in U.S. Patent No. 4,780,228, incorporated herein by reference.

## Claims

1. An oil soluble composition useful as a multifunctional viscosity improver additive for oleaginous composition comprising adduct of:

(A) high molecular weight ethylene copolymer substituted carboxylic acid material comprising reaction product of (i) ethylene copolymer having a number average molecular weight of at least 15,000, and (ii) monounsaturated carboxylic acid material; and

(B) at least one polyamine containing one primary amino group and at least one secondary amino group.

2. The composition according to claim 1 wherein said ethylene copolymer (A) (i) comprises ethylene-propylene copolymer.

3. The composition according to claim 1 or claim 2 wherein said monounsaturated carboxylic acid material (A) (ii) is selected from the group consisting of $C_4$ to $C_{10}$ monounsaturated dicarboxylic acid material, $C_3$ to $C_{10}$ monounsaturated monocarboxylic acid material, and mixtures thereof.

4. The composition according to claim 3 wherein said $C_4$ to $C_{10}$ monounsaturated dicarboxylic acid material is selected from the group consisting of maleic anhydride, maleic acid, and mixtures thereof.

5. The composition according to any of claims 1 to 4 wherein said polyamine contains 1 primary amino group, from 1 to 6 secondary amino groups, and from 7 to 80 carbon atoms.

6. The composition according to any of claims 1 to 5 wherein said polyamine further contains a sulfur or oxygen atom.

7. The composition according to claim 6 wherein said polyamine is represented by the formula

$H_2N(R^1 - NH)_z(R^2 - A)_y R^3$

wherein

$R^1$ is hydrocarbylene containing from 1 to 6 carbons;

$R^2$ is hydrocarbylene containing from 1 to 6 carbons;

$R^3$ is hydrocarbyl containing from 1 to 40 carbons;

A is oxygen or sulfur;

y is zero or one; and

z has a value of from 1 to 6.

8. The composition according to claim 7 wherein $R^1$ and $R^2$ are alkylene and $R^3$ is alkyl.

9. The composition according to claim 8 wherein $R^1$ and $R^2$ are independently alkylene containing from 2 to 4 carbon atoms and $R^3$ is alkyl containing from 5 to 30 carbons.

10. The composition according to claim 9 wherein $R^1$ and $R^2$ are propylene, and $R^3$ is alkyl containing

from 10 to 20 carbon atoms.

11. The composition according to claim 10 wherein $R^1$ and $R^2$ are propylene, and $R^3$ is alkyl containing from 10 to 20 carbon atoms.

12. The composition according to any of claims 1 to 11 comprising reaction product of (A), (B) and (C) a $C_{50}$ to $C_{400}$ hydrocarbyl substituted carboxylic acid component containing 1 to 2 carboxylic acid groups or anhydride group.

13. The composition according to claim 12 wherein said $C_{50}$ to $C_{400}$ hydrocarbyl substituted carboxylic acid component (C) comprises $C_{50}$ to $C_{400}$ hydrocarbyl substituted $C_4$ to $C_{10}$ dicarboxylic acid or anhydride.

14. The composition according to claim 13 wherein said $C_{50}$ to $C_{400}$ hydrocarbyl substituted dicarboxylic acid or anhydride is selected from $C_{50}$ to $C_{400}$ hydrocarbyl substituted succinic acid, $C_{50}$ to $C_{400}$ hydrocarbyl substituted succinic anhydride, and mixtures thereof.

15. The composition according to claim 14 wherein said $C_{50}$ to $C_{400}$ hydrocarbyl substituted succinic anhydride comprises polybutenyl substituted succinic anhydride.

16. An oleaginous composition comprising:

(i) oleaginous material; and

(ii) composition of any of of claims 1 to 15.

17. The composition according to claim 16 wherein (i) is lubricating oil.

18. The composition according to claim 17 containing a viscosity improving and dispersant effective amount of (ii).

19. The composition according to claim 18 containing from 0.01 to 20 wt % of (ii).

20. The composition according to claim 19 containing from 0.1 to 15 wt. % of (ii).

21. The composition according to claim 20 containing from 0.2 to 5 wt. % of (ii).

European Patent Office

# EUROPEAN SEARCH REPORT

Application Number

EP 90 30 5562

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 050 994 (EDWIN COOPER)<br>* Claim 1; page 7, line 24 - page 8, line 9; page 9, line 25; page 4, lines 15-16; page 14, lines 13-14 *<br>--- | 1-5,7-11,16-21 | C 10 M 143/02<br>C 10 M 149/06<br>C 10 M 151/04<br>C 10 M 159/12<br>C 10 L 1/22<br>C 10 L 1/24<br>C 08 F 8/00 //<br>(C 10 M 149/06<br>C 10 M 143:02 )<br>(C 10 M 151/04<br>C 10 M 143:02 )<br>(C 10 M 159/12<br>C 10 M 129:28<br>C 10 M 129:93<br>C 10 M 133:06<br>C 10 M 135:22<br>C 10 M 143:02 )<br>-/- |
| X | FR-A-2 388 879 (EXXON RES. AND ENG. CO.)<br>* Page 6, lines 15-26; page 8, lines 17-21; page 11, lines 20-21; page 23, line 19 - page 24, line 3; page 20, line 16 - page 21, line 32 * & US-A-4 144 181 (R.L. ELLIOTT) (Cat. D) | 1-11,16-21 | |
| Y | --- | 12-15 | |
| Y | EP-A-0 146 162 (EXXON RES. AND ENG. CO.)<br>* Page 6, lines 26-30; page 8, lines 32-36; page 16, lines 5-9,20-23 * & US-A-4 517 104 (R.A. BLOCH) (Cat. D)<br>--- | 12-15 | |
| D,X | DE-A-3 025 274 (EXXON RES. AND ENG. CO.)<br>* Claims 1,3,4; page 17, line 5 - page 18, line 13; page 20, line 16 *<br>----- | 1-11 | **TECHNICAL FIELDS SEARCHED (Int. Cl.5)**<br>C 10 M<br>C 10 L<br>C 08 F |

The present search report has been drawn up for all claims

| Place of search | Date of completion of the search | Examiner |
|---|---|---|
| THE HAGUE | 22-08-1990 | HILGENGA K.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

European Patent Office

# EUROPEAN SEARCH REPORT

Application Number

EP 90 30 5562

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| | | | (C 10 N 30/02<br>C 10 N 30:04<br>C 10 N 60:00<br>C 10 N 60:10 ) |
| | | | TECHNICAL FIELDS SEARCHED (Int. Cl.5) |

The present search report has been drawn up for all claims

| Place of search | Date of completion of the search | Examiner |
|---|---|---|
| THE HAGUE | 22-08-1990 | HILGENGA K.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)